# EUROPEAN PATENT SPECIFICATION

(11) **EP 4 082 646 B1**
(45) Date of publication and mention of the grant of the patent: **22.10.2025**
(21) Application number: 21382376.8
(22) Date of filing: 29.04.2021
(51) Int. Cl.: B01D 29/05, B01D 29/68, B01D 29/64, B01D 29/92

(54) **LIQUID AND FINE SOLIDS SEPARATING DEVICE**
VORRICHTUNG ZUM TRENNEN VON FLÜSSIGEN UND FEINEN FESTEN STOFFEN
DISPOSITIF DE SÉPARATION DE LIQUIDE ET DE FINES PARTICULES SOLIDES

(43) Date of publication of application: 02.11.2022
(73) Proprietor: Lleal, S.A.U., 08401 Granollers-Barcelona (ES)
(72) Inventor: LLEAL TOST, Alexandre, 08401 Granollers-Barcelona (ES); FLORES BAENA, Manuel José, 08401 Granollers-Barcelona (ES)
(74) Representative: Urizar Anasagasti, Jesus Maria

(56) References cited:
- WO-A1-91/12870
- BE-A- 677 750

## Description

### Technical field.

The present invention relates to a liquid and fine solids separating device applicable in industrial, food, chemical and pharmacological processes.

### Prior state of the art

In different processes of the indicated sectors, the need arises to separate a liquid from a mixture containing fine solids, with a size of a few microns, for example between 5 and 30 microns.

The use of the so-called Nutsche filters is known in the state of the art, which have a tank containing the mixture of liquid and fine solids to be separated, and the lower end of which is open and fixed on a proper separating device.

This separating device comprises, in descending order, an interchangeable filter for retaining the solid particles and a fixed perforated plate through which the filtered liquid falls.

A general drawback of filters of this type is that the fine solid particles retained by the filter form a cake that limits the filtering function and prevents the correct operation of the separating device.

Various solutions are known for eliminating the cake of solid particles and recovering the separating capacity of the filter.

Specifically, document DE3135210A1 describes a filter with a dome-shaped filter container, particularly for use thereof as a secondary filter for sludge, wherein the filter screen with the bottom of the drainage chamber is carried by a frame that can pivot by way of a hatch between a horizontal sealing operation position and a vertical position for discharging the cake of solid particles.

Document EP1399236 (A1) describes a Nutsche pressure filter with cleaning device for the filter cake. Said filter is formed by a rotary bottom that rotates 180° along a line. The filter cake can be detached from the filter medium with the help of compressed air. No disintegration is required, which provides an inexpensive method.

Document BE 677750 A describes a procedure for cleaning a sieve without interrupting the screening of the loaded liquid, by propelling a cleaning liquid under pressure through the screen, against the flow of the liquid to be screened. The cleaning liquid thus passing through the sieve in the opposite direction to the charged liquid, loosens the solid particles that clog the sieve and prevents it from clogging. The flow of cleaning liquid through the screen may be intermittent, but preferably is continuous throughout the screen. It is carried out either on one part of the sieve at a time, or on several parts simultaneously, successively passing from one part to another following a cycle so that at the end of the cycle the entire sieve has been cleaned.

The technical problem that arises is the development of a separating device that enables the solid particle cake to be eliminated in an efficient way, without performing the operations of turning the filter means and given the nature of some solids, keeping the product inside an enclosure with controlled conditions at all times, conditions used in the aforementioned background; and that has greater versatility, adapting to the needs of each client depending on the features of the mixture to be separated.

### Description of the invention

The liquid and fine solids separating device, object of this invention, comprises a tank, which contains the mixture of liquid and fine solids to be separated, is provided with a lower mouth coupled with a support structure of an interchangeable filter, in contact with the contents of the tank, and a fixed perforated plate, arranged below the filter and provided with outlet holes for the filtered liquid.

This separating device exhibits adequate technical features to carry out different functions, specifically:
a) repetitively applying a pressurised fluid on successive localised areas of the lower surface of the perforated plate to clean the filter during the separation operation, or to dry the solid product cake accumulated on the filter, once the separation is completed;
b) repetitively applying suction on successive localised areas of the lower surface of the perforated plate to accelerate the filtering and separation of the liquid; and,
c) scraping the lower surface of the perforated plate to eliminate the product suspended from it, especially when working with viscous products.

To do this, this separating device comprises, below the perforated plate and close to the same, radial blades mounted on a rotary shaft and having at the top a plurality of holes facing said perforated plate and connected to a pressurised fluid circulation conduit; said conduit being provided with a mouth for coupling an external conduit for supplying pressurised fluid, or an external suction conduit.

By introducing pressurised fluid, liquid or gas, or applying suction by means of said external conduit, the device can perform different functions during the filtering and separation of the liquid, and once said filtering and separation is complete.

Specifically, the supply of pressurised liquid supplied by said external conduit and projected through the holes of the blades, in an upward direction, against the perforated plate, passing through the holes of said perforated plate, cleans the filter, freeing it from the accumulated solid particles, while the projection of a gaseous fluid enables, once the separation is complete, the drying of the accumulated solid particle cake on the filter to be accelerated.

The suction through the external conduit facilitates the passage of the liquid through the filter and the separation thereof, reducing the filtering and separation time.

Below the plane of the blades, this device comprises a tray for collecting the filtered liquid in communication with an outlet conduit for the filtered liquid.

The rotation of the shaft causes the blades to perform respective circular sweeps in each rotation that cover the entire surface of the perforated plate, concentrating the projection or the suction of the fluid in successive radial areas of the perforated plate, which increases the effectiveness thereof.

The application of pressurised fluid or the suction of fluid in a reduced area of the perforated plate enhances, where appropriate, the cleaning of the filter or the drying of solid particles, or the extraction and separation of the liquid; furthermore, the rotation of the blades guarantees that the application of the pressurised fluid or the suction is repeatedly concentrated on successive radial areas of the plate, increasing the efficiency thereof.

Advantageously, the device comprises at least two blades regularly distributed around the rotary shaft, which contributes to balancing the rotary assembly.

The aforementioned rotary shaft comprises a hub mounted through a vertical hole of the tray for collecting filtered liquid and coupled, below said tray, by means of a transmission to a motor that transmits the rotation movement thereto.

The aforementioned shaft has a fluid circulation conduit therein that communicates the connection mouth of the external conduit for fluid suction or impulsion with the holes of the blades and an outlet conduit for the filtered liquid collected by the tray provided with the corresponding outlet mouth for the filtered liquid.

In an embodiment of the invention, the device comprises additional blades provided with replaceable high-contact scrapers, which act against the lower surface of the perforated plate and move over the same during the rotation of said blades, eliminating the product suspended from said lower surface or adhered to the same, which is frequent when viscous products are separated.

It should be noted that any of the operations described above can be carried out without altering the control conditions of the product.

### Brief description of the contents of the drawings.

As a complement to the description provided herein, and for the purpose of helping to make the features of the invention more readily understandable, the present specification is accompanied by a set of drawings which, by way of illustration and not limitation, represent the following:

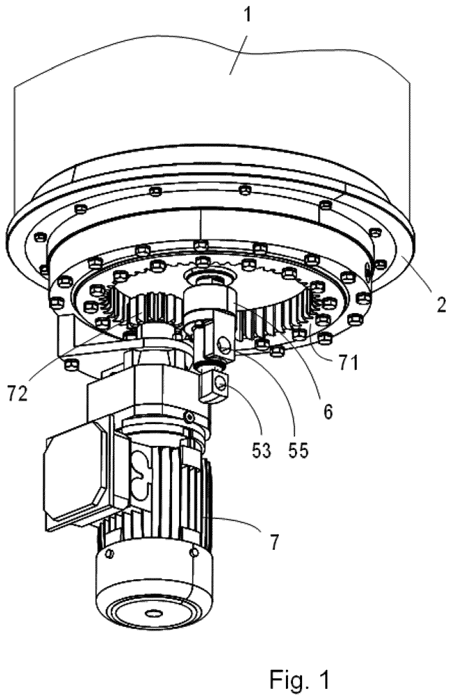

- Figure 1 shows a lower perspective view of the liquid and fine solids separating device, according to the invention, wherein the tank containing the product to be separated has been partially and schematically represented.
- Figure 2 shows a profile view of the separating device of the preceding figures, cross-sectioned along a vertical plane.
- Figure 3 shows an elevation view of the separating device of Figure 1.
- Figure 4 shows a perspective view of an exemplary embodiment of a group of blades, including two radial blades with holes for projecting or sucking fluid, and two additional blades provided with high-contact scrapers.
- Figure 5 shows a partial cross-sectional view of an exemplary embodiment of the device of the invention provided with the blades of Figure 4 and wherein the mounting of one of the scrapers on the corresponding additional blade can be observed, acting against the lower surface of the perforated plate.

### Detailed description of embodiments of the invention.

In the exemplary embodiment shown in the attached figures, the liquid and fine solids separating device comprises a tank (1) containing a mixture of the liquid and the fine solids to be separated.

This tank (1) comprises a lower mouth and is fixed by conventional means (not shown) on a support structure (2), having a general annular configuration.

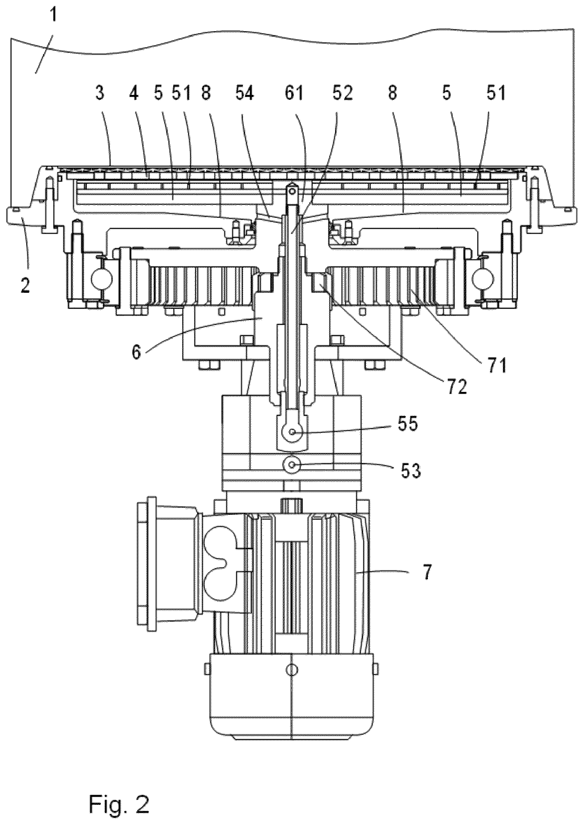

As shown in the cross section of Figure 2, mounted on said annular structure (2) are an interchangeable filter (3), with one or more layers of filtering material, which is kept facing the lower mouth of the tank (1) and in contact with the product to be separated contained in said tank (1), and a fixed perforated plate (4), arranged below the filter (3) and provided with a plurality of outlet holes for the filtered liquid towards the lower area.

The device comprises radial blades (5) mounted on a rotary shaft (6) that receives a rotational movement from a transmission driven by a motor (7).

In the example shown, said transmission comprises a ring gear (71) fixed to the rotary shaft (6) and a drive pinion (72) that transmits to the gear the rotational movement of the motor (7) that is fixed to one side of the structure (2).

The aforementioned radial blades (5) are located below the perforated plate (4) and very close to the lower surface thereof.

Said radial blades (5) comprise at the top a plurality of holes (51) distributed along the same and connected to a fluid circulation conduit (52) defined inside the rotary shaft (6) and which ends at the bottom in a mouth (53) for connecting an external tube (not shown) for supplying pressurised fluid, or for suction.

Said pressurised fluid can be a gas or a liquid, for example the filtered liquid itself obtained from the previous filtering.

During the rotation thereof, the radial blades (5) perform successive circumferential sweeps under the perforated plate and project the pressurised fluid or apply a vacuum on successive radial areas of the perforated plate (4), so that the action of the pressurised fluid or vacuum concentrates on a relatively small and changing surface of the perforated plate (4), performing in each case and in an effective manner: the cleaning of the entire surface of the filter (3), the drying of the cake of material accumulated on the filter once the liquid has been separated, or the separation of the liquid by the effect of the vacuum.

A tray (8) for collecting the filtered liquid is arranged below the plane defined by the radial blades (5). This tray (8) communicates with an outlet conduit (54) for the filtered liquid, defined on the rotary shaft (6) and which ends at the bottom in an outlet mouth (55) for connecting an outlet tube (not shown) of said filtered liquid.

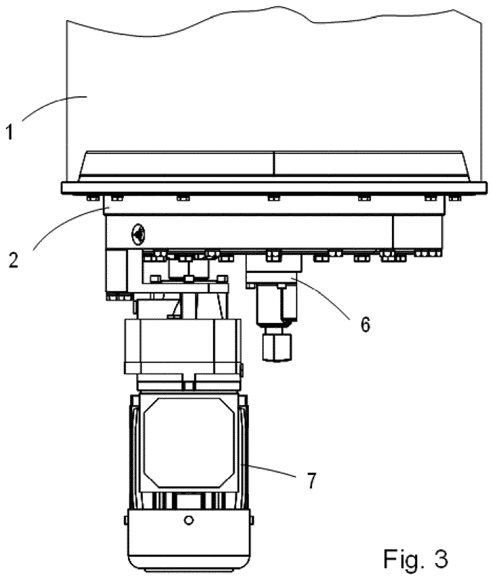

As shown in Figure 3, the rotary shaft (6) is arranged perpendicularly to the perforated plate (4) and coaxially to the same, making it easier for the sweeps of the radial blades (5) to cover the entire surface of the perforated plate (4).

Said rotary shaft (6) comprises at the top a hub (61) that integrally rotates with the ring gear (71) and that passes through a hole defined in the tray (8), with the interposition of the corresponding retainers (not referenced) in charge of preventing the loss of filtered liquid.

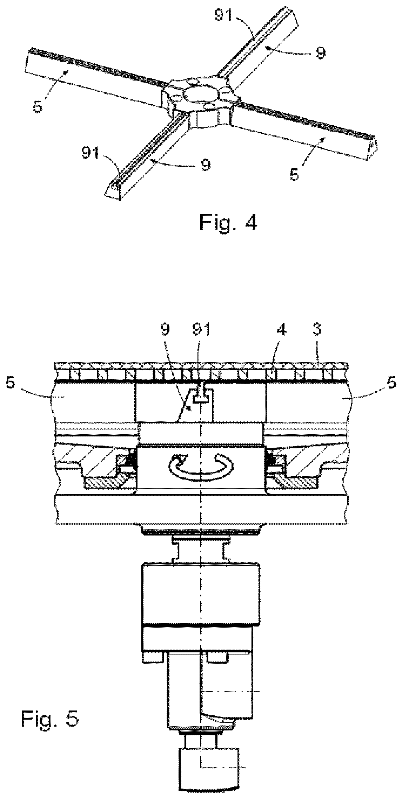

In the exemplary embodiment shown in Figure 4, a group of blades has been represented, able to be coupled to the device of the invention, and which, in addition to the aforementioned radial blades (5), comprises additional blades (9) provided with replaceable high-contact scrapers (91).

As shown in Figure 5, said scrapers (91) act against the lower surface of the perforated plate (4) and move over the same during the rotation of said blades (5, 9), eliminating the product suspended from or adhered to said lower surface.

Having sufficiently described the nature of the invention, in addition to a preferred exemplary embodiment, it is hereby stated for the relevant purposes that the materials, shape, size and layout of the described elements may be modified, provided that it does not imply altering the essential features of the invention claimed below.

## Claims

1. A liquid and fine solids separating device, comprising a tank (1) containing a mixture of liquid and fine solids to be separated, and provided with a lower mouth coupled with a support structure (2) carrying at least one interchangeable filter (3) in contact with the contents of the tank (1), a fixed perforated plate (4), arranged below the filter (3), provided with outlet holes for the filtered liquid, and rotary radial blades (5) arranged below the perforated plate (4) and close to the lower surface thereof; that comprises:
- in their top part said radial blades (5) comprise a plurality of holes (51) facing the plate, connected to a fluid circulation conduit (52) provided with a mouth (53) for connecting an external tube for supplying pressurised fluid, or for suction, said holes (51) of the blades projecting pressurised fluid, or sucking in successive radial areas of the lower surface of the perforated plate during the rotation of the radial blades (5);
- a tray (8) for collecting the filtered liquid arranged below the radial blades (5) and in communication with an outlet conduit (54) for the filtered liquid; and,
- a rotary shaft (6) carrying the radial blades (5), coupled by means of a transmission to a drive motor (7) that transmits a rotational movement,
**characterised in that** the rotary shaft comprises therein: the pressurised fluid circulation conduit (52) to the radial blades and the outlet conduit (54) of the filtered liquid collected by the tray (8), said outlet conduit (54) being provided with an outlet mouth (55) for the filtered liquid.

2. The device, according to claim 1, **characterised in that** the rotary shaft (6) is arranged perpendicularly to the perforated plate (4) and axially aligned with the same, said rotary shaft comprising a hub (61) carrying the radial blades (5) and mounted through a hole of the tray (8) for collecting filtered liquid.

3. The device, according to any of the preceding claims, **characterised in that** the motor (7) and the transmission of the rotational movement of the motor (7) to the shaft (6) are arranged below the tray (8) for collecting liquid.

4. The device, according to claims 2 and 3, **characterised in that** the transmission comprises a ring gear (71) mounted on the structure (2) able to rotate and a drive pinion (72) that transmits to the gear the rotational movement of the motor (7) that is fixed to one side of the structure (2).

5. The device, according to any of the preceding claims, **characterised in that** during the rotational movement of the rotary shaft (6) the radial blades (5) perform successive circular sweeps under the perforated plate (4), covering the entire surface thereof and concentrating the projection of pressurised fluid or the suction in successive radial areas of said perforated plate (4).

6. The device, according to any of the preceding claims, **characterised in that** it comprises additional blades (9) provided with replaceable high-contact scrapers (91), which act against the lower surface of the perforated plate (4) and move over the same during the rotation of the blades, eliminating a product suspended from or adhered to said lower surface of the perforated plate.

## Patentansprüche

1. Vorrichtung zum Trennen von Flüssigkeit und feinen Feststoffen, die einen Tank (1), der eine Mischung einer Flüssigkeit und feinen Feststoffen enthält, die zu trennen sind, und mit einer unteren Öffnung versehen ist, die an eine Stützstruktur (2) gekoppelt ist, die mindestens ein austauschbares Filter (3) trägt, das mit dem Inhalt des Tanks (1) in Kontakt ist, eine feste perforierte Platte (4), die unter dem Filter (3) angeordnet ist, mit Auslasslöchern für die gefilterte Flüssigkeit versehen ist und radiale Rotationsblätter (5), die unter der perforierten Platte (4) und nahe der unteren Fläche davon angeordnet sind, umfasst; die Folgendes umfasst:
- die radialen Blätter (5) umfassen in ihrem oberen Teil eine Vielzahl von Löchern (51), die der Platte zugewandt, mit einer Fluidzirkulationsleitung (52) verbunden sind, die zum Verbinden eines externen Rohres zum Zuführen von unter Druck stehendem Fluid oder zum Absaugen mit einer Öffnung (53) verbunden ist, wobei die Löcher (51) der Blätter während der Drehung der radialen Blätter (5) ein unter Druck stehendes Fluid projizieren oder in aufeinanderfolgenden radialen Bereichen der unteren Fläche der perforierten Platte absaugen;
- eine Wanne (8) zum Sammeln der gefilterten Flüssigkeit, die unter den radialen Blättern (5) angeordnet ist und mit einer Auslassleitung (54) für die gefilterte Flüssigkeit in Kommunikation steht; und,
- eine Rotationswelle (6), die die radialen Blätter (5) trägt und mittels eines Getriebes an einen Antriebsmotor (7) gekoppelt ist, der eine Rotationsbewegung überträgt, **dadurch gekennzeichnet, dass** die Rotationswelle darin Folgendes umfasst: die unter Druck stehende Fluidzirkulationsleitung (52) zu den radialen Blättern und zur Auslassleitung (54) der gefilterten Flüssigkeit, die in der Wanne (8) gesammelt ist, wobei die Auslassleitung (54) mit einer Auslassöffnung (55) für die gefilterte Flüssigkeit versehen ist.

2. Vorrichtung nach Anspruch 1, **dadurch gekennzeichnet, dass** die Rotationswelle (6) senkrecht zur perforierten Platte (4) angeordnet und axial auf dieselbe ausgerichtet ist, wobei die Rotationswelle eine Nabe (61) umfasst, die die radialen Blätter (5) trägt und zum Sammeln von gefilterter Flüssigkeit über ein Loch der Wanne (8) montiert ist.

3. Vorrichtung nach einem der vorhergehenden Ansprüche, **dadurch gekennzeichnet, dass** der Motor (7) und das Getriebe der Rotationsbewegung des Motors (7) zur Welle (6) zum Sammeln von Flüssigkeit unter der Wanne (8) angeordnet sind.

4. Vorrichtung nach Anspruch 2 und 3, **dadurch gekennzeichnet, dass** das Getriebe ein Hohlrad (71), das auf der Struktur (2) angeordnet ist und sich drehen kann, und ein Antriebsritzel (72) umfasst, das die Rotationsbewegung des Motors (7) zum Zahnrad überträgt und auf einer Seite der Struktur (2) fixiert ist.

5. Vorrichtung nach einem der vorhergehenden Ansprüche, **dadurch gekennzeichnet, dass** die radialen Blätter (5) während der Rotationsbewegung der Rotationswelle (6) aufeinanderfolgende kreisförmige Wischbewegungen unter der perforierten Platte (4) durchführen, die die gesamte Fläche davon abdecken und die Projizierung des unter Druck stehenden Fluids oder die Absaugung in aufeinanderfolgenden radialen Bereichen der perforierten Platte (4) konzentrieren.

6. Vorrichtung nach einem der vorhergehenden Ansprüche, **dadurch gekennzeichnet, dass** sie zusätzliche Blätter (9) umfasst, die mit ersetzbaren Hochkontaktschabern (91) versehen sind, die auf die untere Fläche der perforierten Platte (4) wirken und sich über dieselbe während der Rotation der Blätter bewegen und ein Produkt entnehmen, das an der unteren Fläche der perforierten Platte hängt ist oder an derselben anhaftet.

## Revendications

1. Dispositif de séparation de liquide et de solides fins, comprenant un réservoir (1) contenant un mélange de liquide et de solides fins à séparer, et pourvu d'une embouchure inférieure accouplée à une structure de support (2) portant au moins un filtre interchangeable (3) en contact avec le contenu du réservoir (1), une plaque perforée fixe (4), agencée sous le filtre (3), pourvue de trous de sortie pour le liquide filtré, et des lames radiales (5) rotatives agencées sous la plaque perforée (4) et à proximité de sa surface inférieure ; qui comprend :
- dans leur partie supérieure, lesdites lames radiales (5) comprennent une pluralité de trous (51) faisant face à la plaque, raccordés à un conduit de circulation de fluide (52) pourvu d'une embouchure (53) pour le raccordement d'un tube externe pour l'alimentation en fluide sous pression, ou pour l'aspiration, lesdits trous (51) des lames projetant du fluide sous pression ou aspirant des zones radiales successives de la surface inférieure de la plaque perforée pendant la rotation des lames radiales (5) ;
- un plateau (8) destiné à recueillir le liquide filtré, agencé sous les lames radiales (5) et en communication avec un conduit de sortie (54) pour le liquide filtré ; et,
- un arbre rotatif (6) portant les lames radiales (5), accouplé au moyen d'une transmission à un moteur d'entraînement (7) qui transmet un mouvement de rotation, **caractérisé en ce que** l'arbre rotatif comprend en son sein : le conduit de circulation de fluide sous pression (52) vers les lames radiales et le conduit de sortie (54) du liquide filtré recueilli par le plateau (8), ledit conduit de sortie (54) étant pourvu d'une embouchure de sortie (55) pour le liquide filtré.

2. Dispositif, selon la revendication 1, **caractérisé en ce que** l'arbre rotatif (6) est agencé perpendiculairement à la plaque perforée (4) et aligné axialement avec celle-ci, ledit arbre rotatif comprenant un moyeu (61) portant les lames radiales (5) et monté à travers un trou du plateau (8) pour recueillir le liquide filtré.

3. Dispositif, selon l'une quelconque des revendications précédentes, **caractérisé en ce que** le moteur (7) et la transmission du mouvement de rotation du moteur (7) à l'arbre (6) sont agencés sous le plateau (8) de recueil de liquide.

4. Dispositif, selon les revendications 2 et 3, **caractérisé en ce que** la transmission comprend une couronne dentée (71) montée sur la structure (2) apte à entrer en rotation et un pignon d'entraînement (72) qui transmet à la couronne dentée le mouvement de rotation du moteur (7) qui est fixé sur un côté de la structure (2).

5. Dispositif, selon l'une quelconque des revendications précédentes, **caractérisé en ce que** pendant le mouvement de rotation de l'arbre rotatif (6), les lames radiales (5) réalisent des balayages circulaires successifs sous la plaque perforée (4), couvrant toute sa surface et concentrant la projection de fluide sous pression ou l'aspiration de zones radiales successives de ladite plaque perforée (4).

6. Dispositif, selon l'une quelconque des revendications précédentes, **caractérisé en ce qu'**il comprend des lames supplémentaires (9) pourvues de racleurs à contact élevé remplaçables (91), qui agissent contre la surface inférieure de la plaque perforée (4) et entrent en mouvement sur celle-ci pendant la rotation des lames, éliminant un produit suspendu ou collé à ladite surface inférieure de la plaque perforée.
